Europäisches Patentamt

European Patent Office

Office européen des brevets

(19)

(11) EP 1 259 090 A1

(12) **EUROPÄISCHE PATENTANMELDUNG**

(43) Veröffentlichungstag:
    **20.11.2002 Patentblatt 2002/47**

(51) Int Cl.⁷: **H04Q 7/38**

(21) Anmeldenummer: **01112136.5**

(22) Anmeldetag: **17.05.2001**

(84) Benannte Vertragsstaaten:
    **AT BE CH CY DE DK ES FI FR GB GR IE IT LI LU MC NL PT SE TR**
    Benannte Erstreckungsstaaten:
    **AL LT LV MK RO SI**

(71) Anmelder: **SIEMENS AKTIENGESELLSCHAFT**
    **80333 München (DE)**

(72) Erfinder:
    • **Ball, Carsten, Dr.**
      **76764 Rheinzabern (DE)**
    • **Ivanov, Kolio, Dr.**
      **81369 München (DE)**
    • **Müllner, Robert**
      **81379 München (DE)**

(54) **Verfahren zum optimierten Zugriff der Übertragungskapazität in einem Funkkommunikationssystem**

(57) Die Erfindung betrifft ein Verfahren zur optimierten Nutzung der Übertragungskapazität eines in Funkzellen unterteilten Funkkommunikationssystems, bei dem eine Basisstation mittels in Verkehrskanalelementen unterteilten Verkehrskanälen mit einem Kommunikationsendgerät zur Abwicklung von Übertragungen einzelner Dienste kommuniziert.

Jedem Dienst wird gemäß seiner spezifischen Übertragungsbedingungen eine Menge zugeordnet. Jede Menge verfügt über ihr zugeordnete Verkehrskanalelemente zur Abwicklung der Übertragung des zugeordneten Dienstes. Nicht ausschließlich für eine Übertragung benutzte Verkehrskanalelemente werden einer gemeinsamen Ressourcenmenge zugeordnet, auf deren Verkehrskanalelemente, abhängig von einer Dienst- bzw. von einer Zugriffspriorität, die einzelnen Mengen zeitweise zugreifen und diese für deren Übertragungen mit verwenden. Bei einem Mangel an Verkehrskanalelementen im Funkkommunikationssystem werden freie Verkehrskanalelemente für die Ressourcenmenge abhängig von der Netzplanung und der Charakteristika der Verkehrskanalelemente erzeugt.

FIG 6

**Beschreibung**

Die Erfindung betrifft ein Verfahren zur optimierten Nutzung der Übertragungskapazität eines in Funkzellen unterteilten Funkkommunikationssystems, bei dem eine Basisstation mittels in Verkehrskanalelementen unterteilten Verkehrskanälen mit einem Kommunikationsendgerät zur Abwicklung von Übertragungen einzelner Dienste kommuniziert.

Aus dem Dokument WO 96/22665 ist eine Zuordnung von Verkehrskanalelementen in einem TDMA-System bekannt, bei dem von einer Gesamtanzahl an Zeitschlitzen eine Grundanzahl für paketvermittelte Übertragungen reserviert ist und die restlichen Zeitschlitze für kanalvermittelte Übertragungen reserviert sind. Wird ein steigender Bedarf an paketvermittelten Übertragungen zwischen einer Basisstation und einer Mobilstation erkannt, werden nachfolgend für kanalvermittelte Übertragungen reservierte Zeitschlitze den paketvermittelten Übertragungen zugeordnet.

Das in diesem Dokument beschriebene Verfahren beginnt jedoch erst nach einem eingetretenen zusätzlichen Bedarf mit einer Umgruppierung bzw. Freigabe von reservierten Zeitschlitzen, wodurch es zu Verzögerungen in der Abwicklung von Übertragungen in einem Funksystem kommt.

Der Erfindung liegt deshalb die Aufgabe zugrunde, die Übertragungskapazität eines Funkkommunikationssystems, wie beispielsweise eines Mobilfunksystems, derart optimiert zu nutzen, dass zu jeder Zeit sowohl kanalvermittelte als auch paketvermittelte Übertragungen bestmöglich abgewickelt und Übertragungsengpässe vermieden bzw. überwunden werden.

Die Aufgabe der Erfindung wird durch die Merkmale des Anspruchs 1 gelöst. Vorteilhafte Weiterbildungen der Erfindung sind in den Unteransprüchen angegeben.

Zusammenfassend werden durch die erfindungsgemäße Zuordnung von Diensten zu bestimmten Mengen bzw. zu den den Mengen zugeordneten Verkehrskanalelementen und den zeitweisen Zugriff dieser Mengen auf die Verkehrskanalelemente der gemeinsamen Ressourcenmenge, der angepasst auf die jeweilige Verkehrslast des Funkkommunikationssystem bzw. der Funkzelle erfolgt, sowie durch eine vorteilhafte Zuweisung von bestimmten Diensten zu Verkehrskanalelementen, beispielsweise Trägerfrequenzen, die mit einem für diesen Dienst angepassten Trägerfrequenzwiederholungsfaktor geplant wurden, sowie durch weitere spezifische Maßnahmen zur Schaffung von freien Verkehrskanalelementen für die gemeinsame Ressourcenmenge Übertragungsengpässe beim Funkkommunikationssystem und dessen Funkzellen vermieden bzw. überwunden.

Erfindungsgemäß werden dabei jeder Menge eine Mindestanzahl an Verkehrskanalelementen zugeordnet, die der ausschließlichen Übertragung des jeweils zugeordneten Dienstes dienen, wobei diese Mindestanzahl nicht unterschritten werden kann. Dadurch steht zu jeder Zeit, abhängig von der Netzplanungsund Netzkonfigurationsstrategie des Betreibers, für jeden Dienst eine Grundübertragungskapazität zur Verfügung.

Durch die Zuordnung von Verkehrskanalelementen zu einer gemeinsamen Ressourcenmenge und den Zugriff der den Diensten zugeordneten Mengen auf diese Verkehrskanalelemente können zusätzlich auftretende paketvermittelte bzw. kanalvermittelte Übertragungen abgewickelt werden. Der Zugriff erfolgt dabei vorteilhafterweise mit Hilfe einer den Mengen zugeordneten Zugriffspriorität.

Durch den erfindungsgemäßen, nach der Zugriffspriorität erfolgenden Zugriff einer Menge auf die Verkehrskanalelemente einer anderen Menge unter Umgehung der gemeinsamen Ressourcenmenge kann das Funkkommunikationssystem auch bei einem Mangel an freien Verkehrskanalelementen bei der gemeinsamen Ressourcenmenge flexibel reagieren.

Diese Flexibilität wird auch besonders dadurch ermöglicht, dass bei einem Mangel an freien Verkehrskanalelementen bei der Ressourcenmenge nach einer vom Betreiber vorgegebenen Dienstpriorität wieder freie Verkehrskanalelemente für die Ressourcenmenge erzeugt werden.

Durch den nach der Zugriffspriorität erfolgenden dynamischen Zugriff auf die Verkehrskanalelemente wird die ständige optimale Nutzung der Übertragungskapazität des Funkkommunikationssystems erreicht.

Ein Dienst dient dabei beispielsweise der kanalvermittelten Übertragung von GSM-Sprachsignalen oder von AMR-Sprachsignalen oder von HSCSD-Daten oder von ECSD-Daten oder von FAX-Daten, bzw. der paketvermittelten Übertragung von GPRS-Daten oder von EGPRS-Daten. Vorteilhafterweise werden die Mengen, die der ausschließlichen kanalvermittelten Übertragung von Diensten dienen, einer Kanaldienstmenge bzw. die Mengen, die der ausschließlichen paketvermittelten Übertragung von Diensten dienen, einer Paketdienstmenge zugeordnet.

GSM-Sprachsignale werden dabei mittels Fullrate- und/oder Halfrate- und/oder Enhanced-Fullrate-Verfahren übertragen. AMR-Sprachsignale werden mittels Fullrate- und/oder Halfrateverfahren übertragen.

Erfindungsgemäß sind die Verkehrskanalelemente durch die Trägerfrequenzen und/oder den Trägerfrequenzen zugeordneten Zeitschlitzen und/oder Codes definiert. Das erfindungsgemäße Verfahren findet daher Anwendung bei Funkkommunikationssystemen mit FDMA-, TDMA- und CDMA-Zugriffsverfahren, bzw. Kombinationen aus diesen Zugriffsverfahren, wie beispielsweise TD-CDMA oder FD-CDMA.

Vorteilhafterweise werden die Trägerfrequenzen zu mindestens einer Kanalgruppe zusammengefasst, der jeweils eine Dienstprioritätsliste des Betreibers zugeordnet wird. Darin sind mit verschiedenen Prioritäten versehene, über eine einzelne Kanalgruppe abzuwickelnde Dienste derart aufgeführt, dass durch die Zuordnung der Prioritäten eine netzspezifische Optimierung der Übertragungskapazität des Funkkommunikationssystems erfolgt.

Erfindungsgemäß werden mit Hilfe der Dienstpriorität optimale Voraussetzungen für die Planung eines dienstspezifischen Trägerfrequenzwiederholungsfaktors bereitgestellt, was zu einer Optimierung der verfügbaren Ressourcen und damit zu einer Minimierung von Übertragungsengpässen führt.

Durch die bevorzugte Zuweisung von für Interferenzen empfindlicheren Diensten an Trägerfrequenzen, die innerhalb des Kommunikationssystems mit einem größeren Trägerfrequenzwiederholungsfaktor, dem sogenannten Reuse, geplant wurden, wie beispielsweise heute und zukünftig angewandte paketvermittelte Übertragungen, wird die Übertragungsnutzdatenrate dieser Dienste verbessert. Diese Dienste sind systembedingt bei einer Verwendung von Coding-Schemes mit einer hohen User-Bitrate gegenüber störenden gleichen Trägerfrequenzen von benachbarten Basisstationen sehr anfällig. Durch den größeren Trägerfrequenzwiederholungsfaktor sind benachbarte Basisstationen, die mit gleichen Trägerfrequenzen senden, räumlich weiter voneinander entfernt. Die störenden Trägerfrequenzen sind damit besser von den Trägerfrequenzen der Nutzsignale entkoppelt.

Ferner wird bei dem erfindungsgemäßen Verfahren auch die Abhängigkeit von Diensten von existierender Basisstationshardware berücksichtigt. So können beispielsweise EDGE-Dienste bzw. GERAN-Dienste, welche eine 8PSK-Modulation erfordern, nicht über Carrier-Units abgewickelt werden, die nur eine GMSK-Modulation, wie sie heute bei GSM oder GPRS verwendet wird, unterstützen. Erfindungsgemäß werden deshalb EDGE-Dienste bzw. GERAN-Dienste über eine in der Basisstation enthaltene, EDGE-fähige EDGE-Carrier-Unit abgestrahlt und damit EGPRS-Daten und/oder ECSD-Daten und/oder breitbandige AMR-Sprachsignale übertragen.

Stehen in einer Funkzelle momentan genügend Verkehrskanalelemente zur Verfügung, um einen neu hinzukommenden Dienst seinen Anforderungen (z.B. Quality-of-Service-Anforderungen) gemäß zu bedienen, so erfolgt die Zuteilung des Dienstes an die jeweilige Menge bzw. an deren Verkehrskanalelemente anhand der Dienstprioritätsliste.

Stehen in der Funkzelle jedoch nicht genügend Verkehrskanalelemente zur Verfügung, um den neu hinzukommenden Dienst anhand seiner spezifischen Anforderungen zu bedienen, so werden erfindungsgemäß zusätzliche Maßnahmen neben der dienstprioritätsabhängigen Zuordnung der Verkehrskanalelemente durchgeführt. Bei einem ansteigenden Bedarf an Verkehrskanalelementen und bei einem gleichzeitigen Mangel an freien Verkehrskanalelementen bei der Ressourcenmenge werden erfindungsgemäß freie Verkehrskanalelemente für die Ressourcenmenge erzeugt.

Dies geschieht vorteilhafterweise bei einer ausgelasteten Funkzelle durch einen Handover von bestehenden kanalvermittelten Übertragungen an benachbarte Basisstationen bzw. durch einen Cell-Reselection-Prozess bei paketvermittelten Übertragungen. Anhand der Dienstprioritätsliste werden kanalvermittelte und/oder paketvermittelte Übertragungen an benachbarte Funkzellen weitergegeben und freie Verkehrskanalelemente bei der ausgelasteten Funkzelle erzeugt.

Auch können zur Erzeugung von freien Verkehrskanalelementen verwendete Übertragungsverfahren geändert werden. Beispielsweise wird bei der Übertragung von GSM-Sprachsignalen von einem verwendeten Fullrate-Übertragungsverfahren auf ein Halfrate-Übertragungsverfahren übergewechselt, was auch als "Downgrade" bezeichnet wird. Ebenso kann bei einer paketvermittelten Übertragung die einem einzelnen Teilnehmer zugeordnete Anzahl an Verkehrskanalelementen verringert werden, was auch bei einer kanalvermittelten Übertragung von HSCSD-Daten bzw. von ECSD-Daten möglich ist.

Ebenfalls ist erfindungsgemäß die gemeinsame Nutzung von zugeordneten Verkehrskanalelementen durch mehrere Benutzer bei einer paketvermittelten Übertragung vorgesehen, wobei dann die zu übertragenden Daten der einzelnen Benutzer mit Hilfe eines Multiplex-Verfahrens zusammengefasst werden.

Um zu vermeiden, dass eine bereits ausgelastete Funkzelle bzw. die zugehörige Basisstation durch Handover von benachbarten Funkzellen zusätzlich belastet wird, erhält die ausgelastete Funkzelle in einer Zielzellen-Liste eine niedrigere Priorität. Benachbarte Basisstationen greifen zur Planung eines Handovers bzw. eines Cell-Reselection-Prozesses auf diese Zielzellen-Liste zu und führen ihre Handover bzw. ihre Cell-Reselection-Prozesse mit Basisstationen durch, die eine höhere Priorität in der Zielzellen-Liste aufweisen. Dadurch werden weitere Anforderungen von zusätzlichen Übertragungen von der bereits ausgelasteten Basisstation ferngehalten.

Erst wenn in der ausgelasteten Funkzelle wieder freie Übertragungskapazitäten, also Verkehrskanalelemente, zur Verfügung stehen, wird in der Zielzellen-Liste die Priorität der betrachteten Basisstation wieder erhöht.

Durch die Zuordnung einer mittleren Anzahl von Verkehrskanalelementen zu jeder einzelnen Menge wird beispielsweise außerhalb von Hauptverkehrszeiten im Funkkommunikationssystem eine definierte Ausgangssituation für die Übertragung einzelner Dienste erzeugt, ein ständiges Nachregeln der den einzelnen Mengen zugeordneten Verkehrskanalelemente wird vermieden, benötigter Rechen- bzw. Verwaltungsaufwand wird dadurch reduziert. Die jeder Menge jeweils zugeordnete Mindestanzahl bzw. mittlere Anzahl an Verkehrskanalelementen kann erfindungsgemäß während des Betriebes mit Hilfe eines vom Betreiber zur Verfügung gestellten Management-Systems jederzeit geändert werden.

Die Zuordnung von Verkehrskanalelementen zu den einzelnen Mengen wird mit Hilfe eines Algorithmus kontinuierlich überwacht. Für jede einem Dienst zugeordnete Menge wird kontinuierlich ein Verhältnis der von der Menge gegenwärtig benutzten Verkehrskanalelemente zu der der Menge momentan zugeordneten Anzahl an Verkehrskanalelementen gebildet und bei einer betrachteten Menge mit deren Grenzwerten verglichen.

Dabei zeigt ein Unterschreiten eines ersten Grenzwertes an, dass in der betrachteten Menge Verkehrskanalelemente zur Verfügung stehen, die derzeit zu keiner Übertragung benutzt werden. Eine schrittweise Zuordnung dieser Verkehrskanalelemente beispielsweise zur Ressourcenmenge kann eingeleitet und solange fortgesetzt werden, solange bei der betrachteten Menge der erste Grenzwert unterschritten bleibt.

Wird hingegen bei der betrachteten Menge ein zweiter Grenzwert erreicht, so wird bei dieser Menge ein Mangel an Verkehrskanalelementen für Übertragungen angezeigt und eine schrittweise Zuordnung von freien Verkehrskanalelementen, beispielsweise von der Ressourcenmenge, kann bis zum Unterschreiten des zweiten Grenzwertes bei der betrachteten Menge, bzw. bis zum Erreichen einer der Ressourcenmenge zugeordneten Mindestanzahl an Verkehrskanalelementen eingeleitet werden. Da sich mit jeder Aufnahme oder Abgabe eines Verkehrskanalelements die momentane Anzahl der zugeordneten Verkehrskanalelemente bei der betrachteten Menge ändert, wird das beschriebene Verhältnis nach jeder Aufnahme beziehungsweise Abgabe eines Verkehrskanalelements aktualisiert.

Der Ressourcenmenge ist kein erster bzw. zweiter Grenzwert zugeordnet, sondern eine Mindestanzahl an Verkehrskanalelementen. Ihr werden vorteilhafterweise dann ungenutzte Verkehrskanalelemente anderer Mengen zugeordnet, wenn bei der Ressourcenmenge die Mindestanzahl der ihr zugeordneten Verkehrskanalelemente erreicht wird. Diese Mindestanzahl kann vorteilhafterweise während des Betriebes mit Hilfe des vom Betreiber zur Verfügung gestellten Management-Systems jederzeit geändert werden.

Somit kann bei Bedarf über die Ressourcenmenge beispielsweise die Kanaldienstmenge auf die Verkehrskanalelemente einer GPRS-Menge zugreifen.

Eine Zuordnung von Verkehrskanalelementen erfolgt vorteilhafterweise nur dann, wenn bei einer Menge ein Überschuss und bei einer anderen Menge ein dringender Bedarf an Verkehrskanalelementen angezeigt wird. Dadurch wird der Rechen- bzw. Verwaltungsaufwand im Funkkommunikationssystem minimiert.

Bei Paketdatendiensten wird eine Bedarfsmeldung von zusätzlichen Verkehrskanalelementen für unterschiedliche Zuweisungsverfahren von Verkehrskanalelementen vorteilhafterweise nach vergebenen Prioritäten gesteuert. Man unterscheidet hierbei zwischen vertikaler Zuweisung und horizontaler Zuweisung. Beide Verfahren unterscheiden sich in der Reihenfolge, bei der sich mehrere Teilnehmer ein Verkehrskanalelement durch ein Multiplexverfahren teilen.

Bei der vertikalen Zuweisung wird jedes Verkehrskanalelement so lange auf mehrere Teilnehmer aufgeteilt, bis eine Maximalzahl an mittels Multiplexverfahren zusammengefassten Teilnehmern dort erreicht ist. Erst dann wird bei einem zusätzlichen Bedarf ein weiteres Verkehrskanalelement zugewiesen, das dann durch zusätzliche Teilnehmer wiederum bis zum Erreichen der Maximalzahl an Teilnehmer pro Verkehrskanalelement aufgefüllt wird. Dadurch werden horizontal liegende Verkehrskanalelemente zunächst vertikal gefüllt, das heißt mehrere Teilnehmer teilen sich ein Verkehrskanalelement, bis nach Erreichen des Maximalwertes das nächste horizontal liegende Verkehrskanalelement zugewiesen wird.

Beim horizontalen Zuweisungsverfahren hingegen werden die freien Verkehrskanalelemente solange mit maximal einem Teilnehmer pro Verkehrskanalelement belegt, bis alle freien Verkehrskanalelemente belegt sind. Erst dann werden bei steigendem Bedarf mehrere Teilnehmer auf ein Verkehrskanalelement mit Hilfe von Multiplexverfahren zusammengefasst. Da bei diesem Zuweisungsverfahren alle freien Verkehrskanalelemente sehr schnell belegt werden können, wird durch Prioritäten gesteuert, ob beispielsweise beim Erreichen des zweiten Grenzwertes bei einer GPRS-Menge bzw. bei einer EGPRS-Menge zunächst mehrere Teilnehmer auf ein Verkehrskanalelement mittels Multiplexverfahren zusammengefasst werden, bis die gewählte Maximalzahl an Teilnehmern erreicht ist und anschließend Bedarf für ein weiteres Verkehrskanalelement angemeldet wird, oder ob beim Erreichen des jeweiligen zweiten Grenzwerts sofort Bedarf für ein weiteres Verkehrskanalelement angemeldet wird und im Falle eines frei verfügbaren Verkehrskanalelements dieses der anfordernden Menge zugeordnet wird. Im ersten Fall wird vorteilhafterweise durch Prioritäten gesteuert, ob eine Nichterfüllung bestimmter Serviceanforderungen, wie beispielsweise der Einhaltung von geforderten Quality-of-Service-Anforderungen, zu einer sofortigen Bedarfsanforderung führt.

Vorteilhafterweise wird bei Bedarf solange auf die freien Verkehrskanalelemente der Ressourcenmenge zugegriffen, bis deren zugeordnete Mindestanzahl an Verkehrskanalelementen erreicht wird.

Beispielsweise greift die Kanaldienstmenge unter Beachtung der Grenzwerte bei einem ansteigenden Bedarf an Verkehrskanalelementen für kanalvermittelte Übertragungen vorteilhafterweise auf die freien Verkehrskanalelemente der gemeinsamen Ressourcenmenge zu und gibt bei einem sich verringernden Bedarf freiwerdende Verkehrskanalelemente solange an die Ressourcenmenge ab, bis die Kanaldienstmenge, bzw. die ihr zugeordneten Mengen, die mittlere Anzahl an Verkehrskanalelementen erreicht hat bzw. haben.

Steigt nachfolgend der Bedarf an paketvermittelten Übertragungen an, werden solange Verkehrskanalelemente der Kanaldienstmenge der Ressourcenmenge und von dieser der Paketdienstmenge zugeordnet, bis die Kanaldienstmenge, bzw. die ihr zugeordneten Mengen, ihre Mindestanzahl an Verkehrskanalelementen erreicht hat bzw. haben.

Gleiches gilt sinngemäß für andere Mengen, wie beispielsweise für die Paketdienstmenge.

Vorteilhafterweise erfolgt der jeweilige Zugriff der Mengen auf die Verkehrskanalelemente der Ressourcenmenge unter der Berücksichtigung einer vom Benutzer erstellten Zugriffspriorität. Dabei kann ein direkter Zugriff, beispielsweise einer EGPRS-Menge auf die Verkehrskanalelemente einer GPRS-Menge unter Umgehung der Ressourcenmenge erfolgen. Dadurch wird verhindert, dass bei einer bereits stark ausgelasteten Funkzelle eine stetige einseitige Verminderung der Verkehrskanalelemente einzelner Mengen erfolgt, bzw. dass, abhängig von einer Strategie des Betreibers, einzelne Mengen auf Kosten anderer sich ständig in einer Sättigungssituation befinden, wodurch Systemdynamik verloren gehen würde.

Besonders vorteilhaft ist, dass erfindungsgemäß bei einer ersten Menge, die ihre freiwerdenden Verkehrskanalelemente an eine zweite Menge abgab, bei einem nachfolgend eintretenden Bedarf an Verkehrskanalelementen bei beiden Mengen der ersten Menge solange Verkehrskanalelemente der zweiten Menge zugeführt werden, bis die erste Menge wieder ihre zugeordnete mittlere Anzahl an Verkehrskanalelementen erreicht hat, was vorteilhafterweise nach Prioritäten gesteuert erfolgt.

Anwendungsbeispiele der Erfindung finden sich bei Kommunikationssystemen, insbesondere Mobilfunksystemen, bei denen über eine Funkschnittstelle Signale ausgetauscht werden.

Im Folgenden werden Ausführungsbeispiele der Erfindung anhand der Zeichnung näher erläutert. Dabei zeigen:

| | |
|---|---|
| FIG 1 | ein Funkkommunikationssystem mit einem kleinen Trägerfrequenzenwiederholungsfaktor, |
| FIG 2 | ein Funkkommunikationssystem mit einem auf FIG 1 bezogenen, größeren Trägerfrequenzenwiederholungsfaktor, |
| FIG 3 | zwei Kanalgruppen mit jeweils zugeordneter Dienstprioritätsliste, |
| FIG 4 | Verkehrskanalelemente bei einem FDMA-TDMA-Funkkommunikationssystem, |
| FIG 5 | Verkehrskanalelemente bei einem TD-CDMA-Funkkommunikationssystem, |
| FIG 6 | eine Ressourcenmenge und einzelnen Diensten zugeordnete Mengen einer Funkzelle mit den Mengen zugeordneten Kennwerten, |
| FIG 7, FIG 8, FIG 9 und FIG 10 | eine dynamische Zuordnung von Verkehrskanalelementen der Mengen und der Ressourcenmenge aus FIG 6, bei einem Anstieg von kanalvermittelten Übertragungen, |
| FIG 11 | ausgehend von FIG 10 eine Zuordnung von Verkehrskanalelementen der Mengen und der Ressourcenmenge bei einer Verringerung von kanalvermittelten Übertragungen, |
| FIG 12 | ausgehend von FIG 10 eine Zuordnung von Verkehrskanalelementen der Mengen und der Ressourcenmenge bei einem Anstieg von paketvermittelten Übertragungen, |
| FIG 13 | ausgehend von FIG 7 eine Zuordnung von Verkehrskanalelementen der Mengen und der Ressourcenmenge bei einem Anstieg von paketvermittelten Übertragungen. |

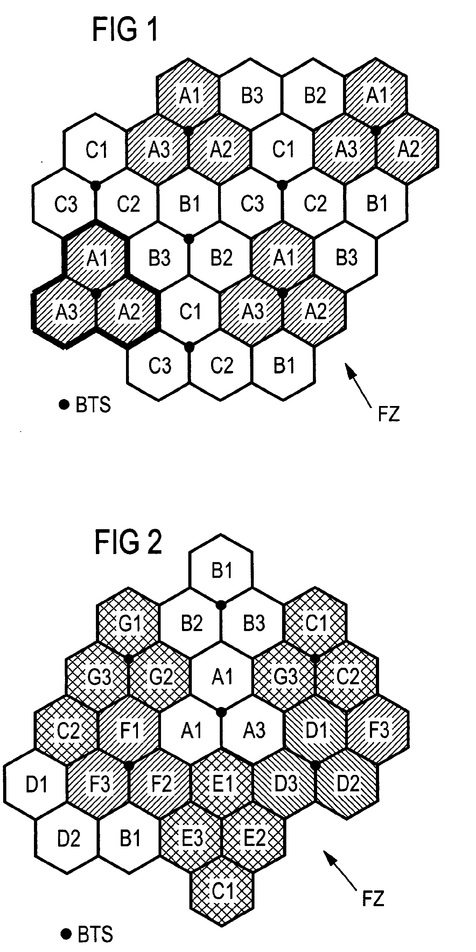

FIG 1 zeigt ein Funkkommunikationssystem mit einem kleinen Trägerfrequenzenwiederholungsfaktor.

Bei diesem Funkkommunikationssystem versorgt jeweils eine Basisstation BTS drei Funkzellen FZ. Eine Basisstation BTS versorgt beispielsweise A1, A2 und A3 ; eine weitere B1, B2 und B3 und abschließend eine weitere C1, C2 und C3.

Gleich benannte Funkzellen FZ benutzen jeweils gleiche Trägerfrequenzen, wodurch sich bei einer betrachteten Fläche gleiche Trägerfrequenzen in bestimmten, engen räumlichen Abständen wiederholen. Durch den kleineren Trägerfrequenzwiederholungsfaktor sind derart geplante Funkkommunikationssysteme besonders geeignet für die kanalvermittelte Übertragung von Sprachdiensten, die für von gleichen Trägerfrequenzen verursachte Störungen bzw. Interferenzen relativ unempfindlich sind.

FIG 2 zeigt ein Funkkommunikationssystem, das bezogen auf FIG 1 einen größeren Trägerfrequenzenwiederholungsfaktor aufweist.

Auch hier versorgt jeweils eine Basisstation BTS jeweils drei Funkzellen FZ, beispielsweise A1, A2, A3. Durch den großen Trägerfrequenzwiederholungsfaktor sind derart geplante Funkkommunikationssysteme besonders geeignet für die paketvermittelte Übertragung von Datendiensten, die für von gleichen Trägerfrequenzen verursachte Störungen anfälliger sind. Störungen dieser Art werden durch eine größere räumliche Trennung von gleichen Trägerfrequenzen verringert bzw. vermieden.

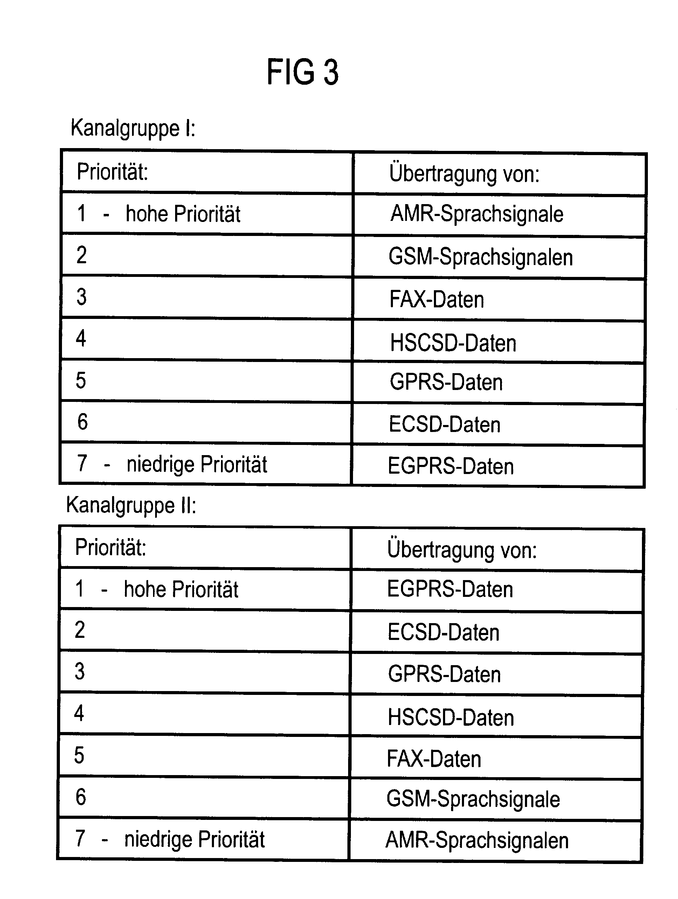

FIG 3 zeigt zwei Kanalgruppen I und II mit jeweils zugeordneter Dienstprioritätsliste.

Über die Kanalgruppe I, die mehrere Trägerfrequenzen umfassen kann, werden bevorzugt AMR-Sprachsignale übertragen, gefolgt von der Übertragung von GSM-Sprachsignalen mit einer geringeren Priorität, bis zur abschließenden Übertragung von EGPRS-Daten mit der niedrigsten Priorität.

Vergleichend mit FIG 1 werden dieser Kanalgruppe I unter der Annahme, dass deren Trägerfrequenzen innerhalb des Kommunikationssystems mit einem kleineren Trägerfrequenzwiederholungsfaktor geplant wurden, bevorzugt kanalvermittelte Übertragungen von Sprachsignalen zugeordnet, wobei die Prioritäten innerhalb der Dienstprioritätsliste abhängig von der Sensitivität des zu übertragenden Dienstes gegenüber Interferenzen vergeben wurden. Durch die häufige Wiederholung der Trägerfrequenzen beim Funkkommunikationssystem wird dessen Übertragungskapazität stark erhöht.

Die Kanalgruppe II, die wiederum mehrere Trägerfrequenzen umfasst, überträgt mit der höchsten Priorität EGPRS-Daten, gefolgt von der Übertragung von ECSD-Daten bis zur abschließenden Übertragung von AMR-Sprachsignalen mit der geringsten Priorität.

Um die Vorteile der Übertragung von hohen Datenraten durch schwach codierte Coding-Schemes, die möglichst geringer Interferenz ausgesetzt sein sollen, auszunutzen, werden vergleichend mit FIG 2, dieser Kanalgruppe II unter der Annahme, dass deren Trägerfrequenzen innerhalb des Funkkommunikationssystems mit einem größeren Frequenzwiederholungsfaktor geplant wurden, bevorzugt paketvermittelte Übertragungen von Datendiensten zugeordnet. Würde man hier den kanalvermittelten Sprachdiensten eine höhere Priorität zuordnen, so wäre dies eine Verschwendung von teuren Systemressourcen des Funkkommunikationssystems.

Innerhalb eines Funkkommunikationssystems, bei dem frequenzabhängig gleichzeitig zwei oder auch mehrere Trägerfrequenzwiederholungsfaktoren verwirklicht sind, wird abhängig vom Trägerfrequenzwiederholungsfaktor eine durch Prioritäten gesteuerte, dienstspezifischen Zuordnung von Diensten vorgenommen.

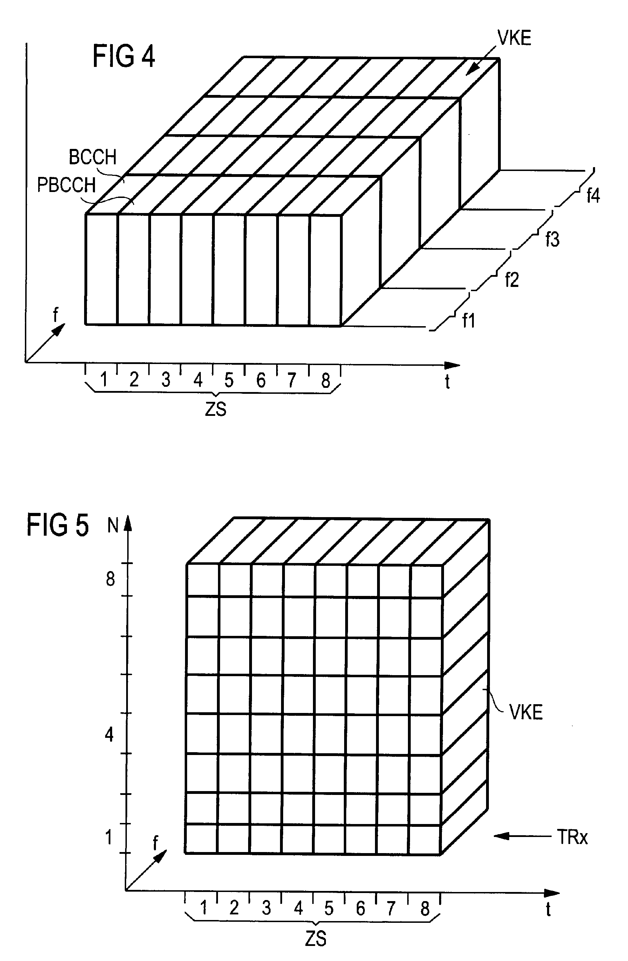

FIG 4 zeigt Verkehrskanalelemente VKE bei einem FDMA-TDMA Funkkommunikationssystem, wie beispielsweise einem GSM-Mobilfunknetz.

Vier Trägerfrequenzen $f_1$, $f_2$, $f_3$ und $f_4$ einer Funkzelle sind jeweils in acht Zeitschlitze ZS unterteilt. Daraus ergeben sich insgesamt 4 x 8 = 32 Verkehrskanalelemente VKE. Systembedingt werden jedoch pro Funkzelle ein oder mehrere Verkehrskanalelemente VKE für Signalisierungsaufgaben (wie beispielsweise BCCH und PBCCH) belegt, wodurch hier noch 30 Verkehrskanalelemente VKE für abzuwickelnde Übertragungen von Diensten verbleiben.

Für die Übertragung von kanalvermittelten Sprachdiensten beispielsweise steht jeweils eines dieser 30 Verkehrskanalelemente VKE genau einem Teilnehmer zur Verfügung.

FIG 5 zeigt Verkehrskanalelemente VKE bei einem TD-CDMA-Funkkommunikationssystem.

Einer Trägerfrequenz TRx sind acht Zeitschlitze ZS zugeordnet. Jeder Zeitschlitz ZS wiederum weist hier durch acht unterschiedliche CDMA-Codes getrennte Verkehrskanalelemente VKE auf.

FIG 6 zeigt eine gemeinsame Ressourcenmenge RM und jeweils einzelnen Diensten zugeordnete Mengen KDM, GPRSM und EGPRSM einer Funkzelle FZ.

Die Menge KDM dient als Kanaldienstmenge der ausschließlichen kanalvermittelten Übertragung von ihr zugeordneten Diensten, beispielsweise der Übertragung von GSM-Sprachdiensten. Die Mengen GPRSM bzw. EGPRSM dienen der ausschließlich paketvermittelten Übertragung von GPRS- bzw. EGPRS-Diensten. Beide Mengen GPRSM und EGPRSM werden einer Paketdienstmenge PDM zugeordnet.

Mit $x \in \{EGPRS, GPRS, KDM\}$ wird für die einzelnen Mengen GPRSM, EGPRSM und KDM jeweils eine Mindestanzahl Zminx und eine mittlere Anzahl Zavgx von Verkehrskanalelementen für die Übertragung der jeweiligen Dienste sowie jeweils ein erster Grenzwert GW1x und ein zweiter Grenzwert GW2x festgelegt.

Zminx kann nicht unterschritten werden und dient der Sicherung einer Mindestübertragungskapazität für den zugeordneten Dienst. Eine Mindestanzahl $Zmin_{RM}$ von der Ressourcenmege RM zugeordneten Verkehrskanalelementen kann ebenfalls nicht unterschritten werden. Wird $Zmin_{RM}$ erreicht, so werden gegebenenfalls prioritätsgesteuert freie Verkehrskanalelemente für die gemeinsame Ressourcenmenge RM erzeugt.

Für jede der einzelnen Mengen GPRSM, EGPRSM und KDM wird ein prozentualer Verhältniswert $V_{GPRS}$, $V_{EGPRS}$ und $V_{KDM}$ aus der von der Menge gegenwärtig zur Übertragung benutzten Anzahl an Verkehrskanalelementen zu der ihr gegenwärtig zugeordneten Anzahl an Verkehrskanalelementen gebildet und ständig mit den Grenzwerten GW1x und GW2x verglichen. Der prozentuale Verhältniswert $V_{GPRS}$, $V_{EGPRS}$ und $V_{KDM}$ nimmt den Wert 0 an, wenn bei der betrachteten Menge keine Übertragungen stattfinden. Bei diesen Mengen sind dann für die Zuordnung von Verkehrskanalelementen jeweils deren zugeordnete Mindestanzahl Zminx bzw. deren mittlere Anzahl Zavgx zu beachten.

Bei einem momentanen Überschuss an gegenwärtig nicht für Übertragungen benutzten Verkehrskanalelementen bei einer betrachteten Menge unterschreitet der dortige prozentuale Verhältniswert Vx den ersten Grenzwert GW1x, freie Verkehrskanalelemente werden bei der betrachteten Menge angezeigt. Diese können nun beispielsweise schrittweise der Ressourcenmenge RM zugeordnet werden.

Nach Abgabe eines Verkehrskanalelements wird der Verhältniswert Vx aktualisiert. Unterschreitet Vx weiterhin den ersten Grenzwert GW1x, so kann ein weiteres Verkehrskanalelement aus der betrachteten Menge abgegeben werden. Dies wird schrittweise fortgeführt, solange bei einer anderen Menge Bedarf an weiteren Verkehrskanalelementen angezeigt wird und solange bei der betrachteten Menge der Verhältniswert Vx den dortigen ersten Grenzwert GW1x unterschreitet.

Erreicht bei einer betrachteten Menge der prozentuale Verhältniswert Vx den zweiten Grenzwert GW2x wird ein Mangel an Verkehrskanalelementen für Übertragungen bei dieser Menge angezeigt. Es kann nun bis zu einem Unterschreiten des zweiten Grenzwertes GW2x eine schrittweise Zuordnung von freien Verkehrskanalelementen, beispielsweise aus der Ressourcenmenge RM, eingeleitet werden. Nach jeder Aufnahme eines Verkehrskanalelements wird das Verhältnis Vx neu berechnet, da sich die Anzahl der zugeteilten Verkehrskanalelemente bei der betrachteten Menge geändert hat.

Die für eine Übertragung von einzelnen Diensten nicht ausschließlich zugeordneten Verkehrskanalelemente $N_{RM}$ werden der Ressourcenmenge RM zugeordnet. Die den einzelnen Mengen GPRSM, EGPRSM und KDM gegenwärtig zugeordnete Anzahl an Verkehrskanalelementen wird mit $N_{GPRS}$, $N_{EGPRS}$ und $N_{KDM}$ bezeichnet.

Bei Bedarf greifen abhängig von einer Zugriffspriorität die Mengen GPRSM und EGPRSM direkt und unter Umgehung der Ressourcenmenge RM gegenseitig auf ihre jeweiligen Verkehrskanalelemente zu.

Vergleichend mit FIG 4 stehen bei der betrachteten Funkzelle FZ eines GSM-Mobilfunksystems eine Anzahl $N_{COMMON}$ = 30 von für Übertragungen verfügbaren Verkehrskanalelementen zur Verfügung.
Vergleichend mit FIG 1 wurden die hier für die Übertragungen der Kanaldienstmenge KDM benutzten Trägerfrequenzen im GSM-Mobilfunksystem mit einem kleineren Trägerfrequenzwiederholungsfaktor geplant, während vergleichend mit FIG 2 die hier bevorzugt für die Übertragungen der Paketdienstmenge PDM benutzten Trägerfrequenzen mit einem größeren Trägerfrequenzwiederholungsfaktor geplant wurden.

Für die Mengen GPRSM, EGPRSM und KDM wird mit $x \in$ {EGPRS,GPRS,KDM} festgelegt:

$$NKDM = N_{EGPRS} = N_{GPRS} = 4 \, , \, N_{RM} = 30\text{-}3{*}4 = 18 \, ,$$

$$Zminx = 1 \, , \, Zmin_{RM} = 1, \, Zavg_{EGPRS} = Zavg_{GPRS} = Zavg_{KDM} = 4 \, ,$$

$$GW1x = 80\%, \, GW2x = 100\%.$$

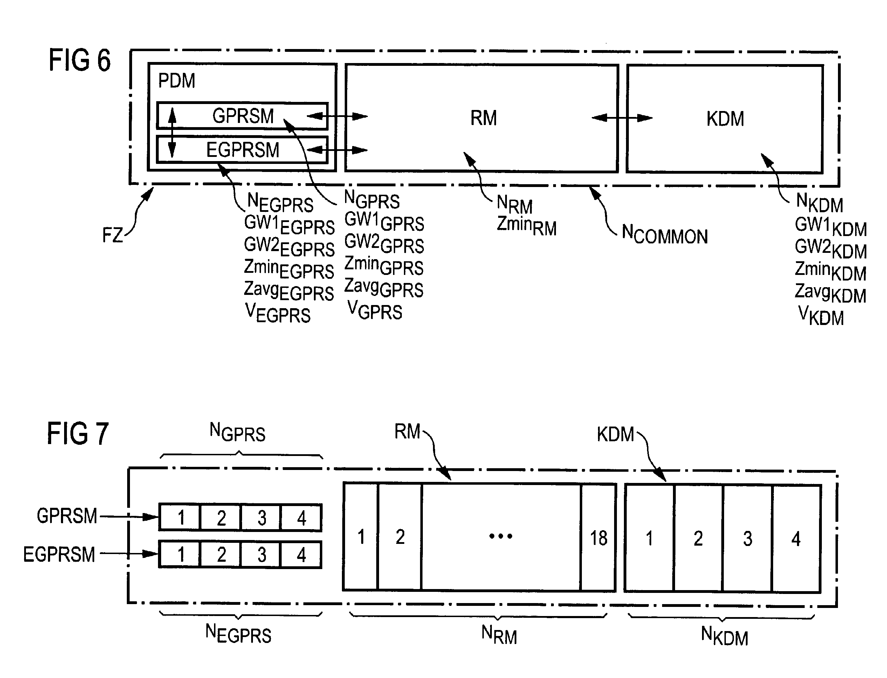

FIG 7, FIG 8, FIG 9 und FIG 10 zeigen einen dynamischen Zugriff auf Verkehrskanalelemente der Mengen GPRSM, EGPRSM, RM und KDM aus FIG 6, bei einem Anstieg von kanalvermittelten Übertragungen.
Dabei wird für FIG 7 beispielsweise vorausgesetzt, dass in der betrachteten Funkzelle FZ anfangs kein Funkverkehr stattfindet, wie dies während einer Nachtperiode der Fall sein kann. Treten nachfolgend die ersten kanalvermittelten Übertragungen auf, so werden diese mit Hilfe der der Kanaldienstmenge KDM zugeordneten Verkehrskanalelemente $N_{KDM}$ abgewickelt.

Hier werden vier kanalvermittelte Übertragungen gleichzeitig abgewickelt. Für jede kanalvermittelte Übertragung wird genau ein Verkehrskanalelement verwendet, d.h. es wird jeweils genau eine sogenannte Fullrate-Verbindung für jede einzelne Übertragung aufgebaut.

Werden von der Kanaldienstmenge KDM zusätzliche Verkehrskanalelemente benötigt, so greift die Kanaldienstmenge KDM auf die Verkehrskanalelemente $N_{RM}$ der gemeinsamen Ressourcenmenge RM zu.

Bei der Kanaldienstmenge KDM errechnet sich $V_{KDM}$ = 100% aus dem Verhältnis (4 benutzte Verkehrskanalelemente)/(4 gegenwärtig zugeordnete Verkehrskanalelelemente) und wird mit den Grenzwerten GW1$_{KDM}$ und GW2$_{KDM}$ der Kanaldienstmenge KDM verglichen. Der zweite Grenzwert GW2$_{KDM}$ = 100% wird erreicht. Ein Mangel an Verkehrskanalelementen in der Kanaldienstmenge KDM wird angezeigt, ein Zugriff der Kanaldienstmenge KDM auf ein Verkehrskanalelement $N_{RM}$ der Ressourcenmenge RM kann eingeleitet werden, wodurch sich dann $N_{RM}$=18 in $N_{RM}$=17 und $N_{KDM}$=4 in $N_{KDM}$=5 ändert, hier nicht gezeigt.

Finden bei der Kanaldienstmenge KDM weiterhin $N_{KDM}$=5 kanalvermittelte Übertragungen gleichzeitig statt und werden zusätzliche kanalvermittelte Übertragungen angefordert, so greift bei einem zweiten Grenzwert GW2$_{KDM}$ = 100% wieder die Kanaldienstmenge KDM auf die freien Verkehrskanalelemente der Ressourcenmenge RM zu. Dies wird bei anhaltendem zusätzlichen Bedarf an kanalvermittelten Diensten fortgeführt, bis die Mindestanzahl $Zmin_{RM}$ =1 an Verkehrskanalelementen bei der Ressourcenmenge RM erreicht ist.

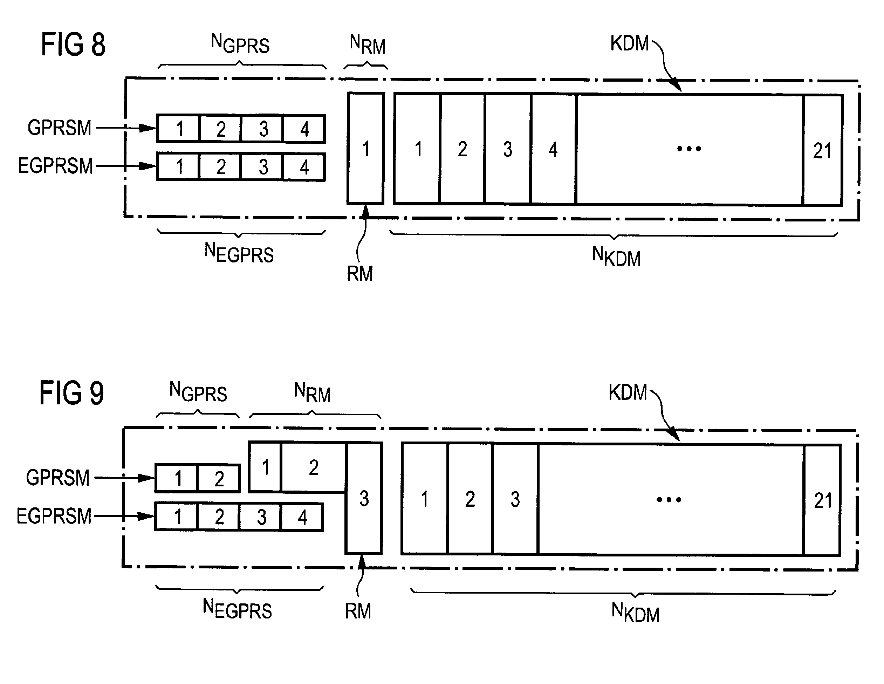

FIG 8 beschreibt ausgehend von FIG 7 eine Situation, bei der bei der Ressourcenmenge $Zmin_{RM}$ = 1 erreicht wurde und mit $N_{KDM}$=21 kanalvermittelte Übertragungen gleichzeitig abgewikkelt werden. Dabei wird angenommen, dass gegenwärtig keine paketvermittelten Übertragungen abgewickelt werden.

Unter der Voraussetzung, dass die zu EGPRSM zugeordneten Dienste eine höhere Dienstpriorität als die zu GPRSM zugeordneten Dienste aufweisen, werden bei anhaltendem Bedarf an Verkehrskanalelementen für kanalvermittelte Dienste, freie und derzeit nicht benötigte Verkehrskanalelemente der Menge GPRSM schrittweise der gemeinsamen Ressourcenmenge RM zugeordnet. Bei der Menge GPRSM beträgt $V_{GPRS}$ = 0% (0/4). Der erste Grenzwert $GW1_{GPRS}$ = 80% wird unterschritten. Bei der Menge GPRSM wird somit ein Überschuss an Verkehrskanalelementen angezeigt, da zur Übertragung von GPRS-Diensten im Moment weniger Verkehrskanalelemente benötigt werden, als der Menge GPRSM gegenwärtig zugeteilt sind.

Die Ressourcenmenge RM erhält ein Verkehrskanalelement der Menge GPRSM zugeordnet, wodurch sich $N_{RM}$=1 in $N_{RM}$=2 und sich $N_{GPRS}$=4 in $N_{GPRS}$=3 ändert, hier nicht gezeigt.

Nach FIG 9 wird im nächsten Schritt mit $V_{GPRS}$ = 0% der Ressourcenmenge RM ein Verkehrskanalelement der Menge GPRSM zugeordnet, wodurch sich kurzzeitig $N_{RM}$=2 in $N_{RM}$=3 ändert und sich $N_{GPRS}$=3 in $N_{GPRS}$=2 ändert.

Jedes derart gewonnene Verkehrskanalelement bei der gemeinsamen Ressourcenmenge RM steht erfindungsgemäß sofort wieder für beispielsweise kanalvermittelte Übertragungen zur Verfügung, wodurch maximal $N_{KDM}$=23 kanalvermittelte Übertragungen gleichzeitig abgewickelt werden könnten, hier nicht gezeigt.

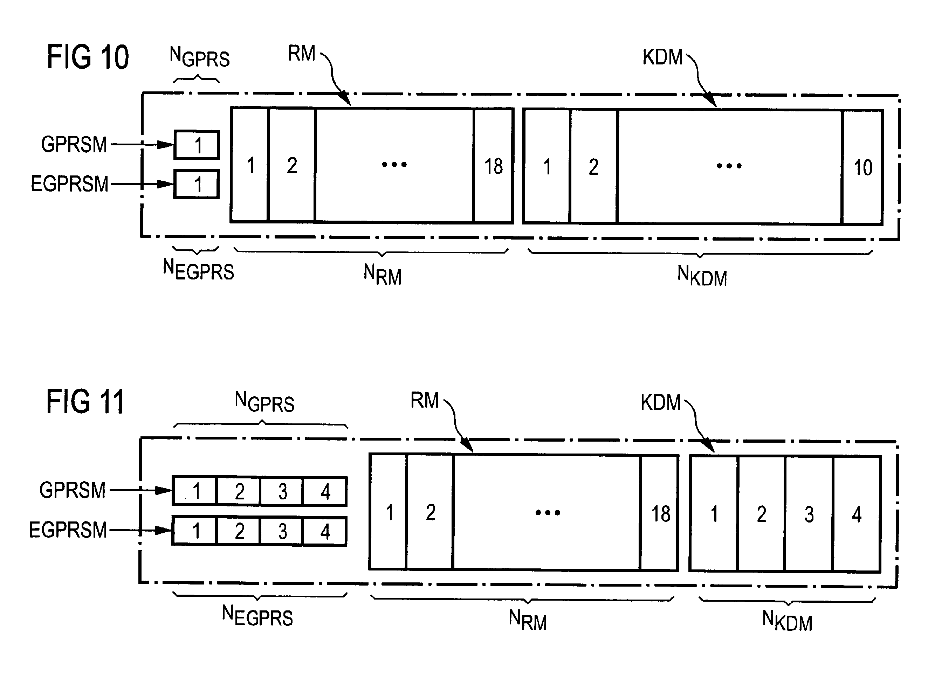

Nach FIG 10 kann die Reduzierung bei der Menge GPRSM nach dem beschriebenen Verfahren so lange fortgesetzt werden, bis bei der Menge GPRSM die Mindestanzahl $Zmin_{GPRS}$ = 1 = $N_{GPRS}$ erreicht wird. Nimmt der Bedarf an kanalvermittelten Übertragungen weiterhin zu, werden schrittweise freie Verkehrskanalelemente der Menge EGPRSM zuerst der gemeinsamen Ressourcenmenge RM und nachfolgend der Kanaldienstmenge KDM zugeordnet. Auch diese Zuordnung erfolgt solange, bis bei der Menge EGPRSM die Mindestanzahl $Zmin_{EGPRS}$ = 1 = $N_{EGPRS}$ erreicht wird. Unter der Annahme, dass mit $N_{KDM}$=10 kanalvermittelte Verbindungen gleichzeitig abgewickelt werden, werden freigewordene Verkehrskanalelemente von der Kanaldienstmenge KDM schrittweise der gemeinsamen Ressourcenmenge RM zugeordnet, es ergibt sich somit $N_{RM}$=18.

Der Vorteil dieses Verfahrens liegt in der Vermeidung einer zusätzlichen Umkonfigurierungszeit, die auftreten würde, wenn beispielsweise ein für kanalvermittelte Übertragungen reserviertes Verkehrskanalelement (TCH) in ein für eine paketvermittelte Übertragung reserviertes Verkehrskanalelement

(PDTCH) umkonfiguriert würde, was systembedingt zu zusätzlichen Verzögerungszeiten für Signalisierung und Acknowledgement führen würde.

Anhand der hier gezeigten Kanaldienstmenge KDM mit $N_{KDM}$=10 zugeordneten Verkehrskanalelementen soll detailliert auf die Grenzwerte $GW1_{KDM}$ und $GW2_{KDM}$ eingegangen werden.

1. Fall:

Bei 9 für Übertragungen benutzten Verkehrskanalelementen beträgt das Verhältnis $V_{KDM}$=90% (aus 9/10),

- der erste Grenzwert $GW1_{KDM}$=80% ist überschritten, d.h. es erfolgt keine Abgabe von einem einzelnen Verkehrskanalelement, da kein Überschuss angezeigt wird,
- der zweite Grenzwert $GW2_{KDM}$=100% ist unterschritten, d.h. es erfolgt keine Aufnahme von einem weiteren Verkehrskanalelement, da kein Mangel angezeigt wird,
- bei einem jetzt eintretenden zusätzlichen Bedarf von einer einzelnen Übertragung wird das Verhältnis $V_{KDM}$=100% (aus 10/10),
- der zweite Grenzwert $GW2_{KDM}$=100% ist erreicht, d.h. ein Bedarf zur Aufnahme eines weiteren Verkehrskanalelements wird angezeigt.

2. Fall:

Bei 7 für Übertragungen benutzten Verkehrskanalelementen beträgt das Verhältnis $V_{KDM}$=70% (aus 7/10),

- der erste Grenzwert $GW1_{KDM}$=80% ist unterschritten, d.h. eine Abgabe von einem einzelnen Verkehrskanalelement ist möglich, ein Überschuss wird angezeigt,
- bei erfolgter Abgabe von einem Verkehrskanalelement beispielsweise an die Ressourcenmenge RM wird $V_{KDM}$=78% (aus 7/9), eine weitere Abgabe eines einzelnen Verkehrskanalelement ist möglich,
- bei erfolgter Abgabe wird $V_{KDM}$=88% (aus 7/8), eine weitere Abgabe eines einzelnen Verkehrskanalelement erfolgt nicht mehr, da der erste Grenzwert $GW1_{KDM}$=80% erreicht bzw. überschritten ist,
- der zweite Grenzwert $GW2_{KDM}$=100% ist unterschritten, d.h. es erfolgt keine Aufnahme von einem Verkehrskanalelement.

3. Fall:

Bei 1 für Übertragungen benutztem Verkehrskanalelement beträgt das Verhältnis $V_{KDM}$=10% (aus 1/10),

- der erste Grenzwert $GW1_{KDM}$=80% ist unterschritten, d.h. eine Abgabe von einem einzelnen Verkehrskanalelement wäre möglich.

4. Fall:

Bei 10 für Übertragungen benutzten Verkehrskanalelementen beträgt das Verhältnis $V_{KDM}$=100% (aus 10/10),

- der zweite Grenzwert $GW2_{KDM}$=100% ist erreicht, d.h. eine Aufnahme von weiteren Verkehrskanalelementen wird eingeleitet,
- es werden verkehrsbedingt z.B. 2 freie Verkehrskanalelemente zusätzlich der Kanaldienstmenge KDM zugeordnet, jedoch nachfolgend nur eine Anzahl von 10 Verkehrskanalelementen für Übertragungen benutzt,
- daraus ergibt sich als Verhältnis $V_{KDM}$=83% (aus 10/12), d.h. 17% der Verkehrskanalelemente werden nicht für Übertragungen benutzt,
- der zweite Grenzwert $GW2_{KDM}$=100% wurde nach Aktualisieren des Verhältnisses $V_{KDM}$ unterschritten, es erfolgt somit keine weitere Aufnahme von Verkehrskanalelementen mehr. Zudem erfolgt auch keine Abgabe von Verkehrskanalelementen, da der erste Grenzwert $GW1_{KDM}$=80% nicht unterschritten wurde.

Eine zusätzliche Definition von weiteren Grenzwerten zur Einführung einer Hysterese ist dabei jederzeit möglich. Mit Hilfe der Hysterese findet die Abgabe von Verkehrskanalelementen bei einem angezeigten Überschuss bzw. die Aufnahme von Verkehrskanalelementen bei einer Anforderung durch eine andere Menge innerhalb eines durch die Grenzwerte gebildeten Entscheidungsbereiches bei einer Menge statt. Eine Zuordnung, ausgelöst durch einen einzigen "harten" Grenzwert wird vermieden, eine verlaufende Zuordnung anhand eines Entscheidungsbereiches wird somit realisiert.

Alternativ zur bisher beschriebenen Zuordnung von Verkehrskanalelementen können prioritätsgesteuert von der Menge GPRSM in dem Moment Verkehrskanalelemente zur Ressourcenmenge RM zugeordnet werden, in dem die Kanaldienstmenge durch den bei ihr aufgetretenen Bedarf auf die Verkehrskanalelemente der gemeinsamen Ressourcenmenge RM zugreift.

Die Anzahl der zugeordneten Verkehrskanalelemente $N_{RM}$ bleibt dadurch bei einem Anstieg von kanalvermittelten Übertragungen und einer dadurch ausgelösten Zuordnung von Verkehrskanalelementen der Ressourcenmenge RM zur Kanaldienstmenge KDM also zunächst konstant, die momentane Anzahl der zugeordneten Verkehrskanalelemente der Menge GPRSM verringert sich schrittweise, solange bei der Menge GPRSM ein Überschuss an Verkehrskanalelementen angezeigt wird.

FIG 11 zeigt ausgehend von FIG 10 eine Zuordnung von Verkehrskanalelementen der Mengen GPRSM, EGPRSM, RM und KDM bei einer Verringerung von kanalvermittelten Übertragungen.

Es wird hier vorausgesetzt, dass der Bedarf an kanalvermittelten Übertragungen solange abnimmt, bis das prozentuale Verhältnis $V_{KDM}$ =0% erreicht wird, also bei der Kanaldienstmenge KDM keine Übertragungen mehr stattfinden.

Die freiwerdenden Verkehrskanalelemente der Kanaldienstmenge KDM werden solange der gemeinsamen Ressourcenmenge RM zugeordnet, bis $Zavg_{KDM} = 4 = N_{KDM}$ erreicht wird.

Die Ressourcenmenge RM gibt der Dienstpriorität entsprechend solange Verkehrskanalelemente zuerst an die EGPRS-Menge ab, bis dort die mittlere Anzahl $Zavg_{EGPRS} = 4 = N_{EGPRS}$ erreicht wird. Anschließend wird nach dem gleichen Verfahren die Menge GPRSM solange aufgefüllt, bis dort $Zavg_{GPRS} = 4 = N_{GPRS}$ erreicht wird. Die Zuordnung von Verkehrskanalelementen wird nun eingestellt.

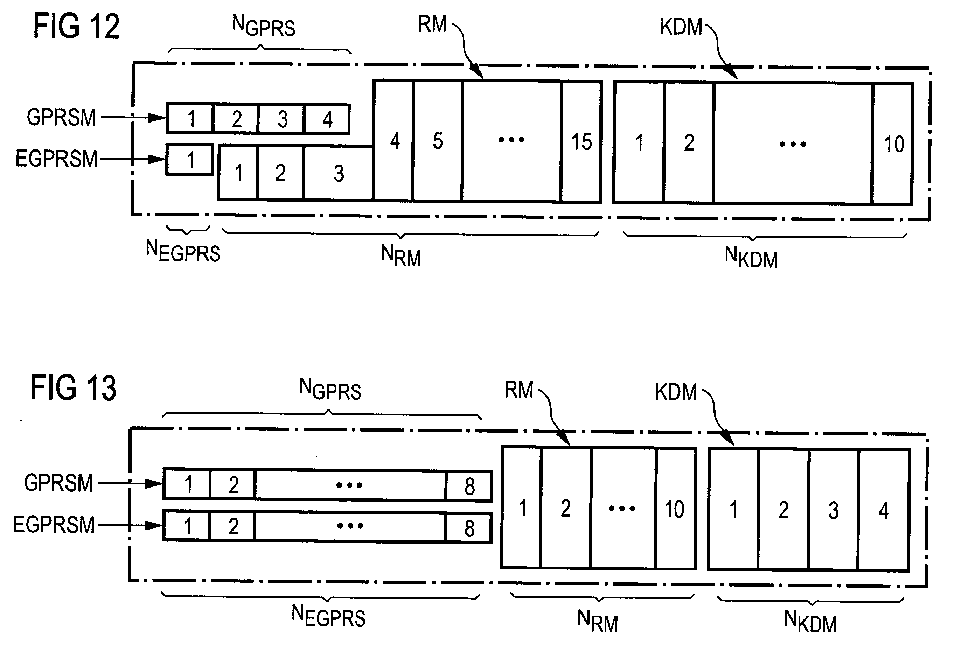

FIG 12 zeigt ausgehend von FIG 10 eine Zuordnung von Verkehrskanalelementen der Mengen GPRSM, EGPRSM, RM und KDM bei einem Anstieg von paketvermittelten Übertragungen.

Es wird vorausgesetzt, dass mit $N_{KDM}$=10 insgesamt 10 kanalvermittelte Übertragungen durch die Kanaldienstmenge KDM gleichzeitig stattfinden und die Anzahl an paketvermittelten Übertragungen durch die GPRS-Menge zunehmen soll, bis der Wert $N_{GPRS}$=4 erreicht wird.

Unter der Voraussetzung, dass die Wiederherstellung der Größe einer zeitlich verringerten Menge - hier GPRSM - eine höhere Priorität besitzt als das Beibehalten von Verkehrskanalelementen durch zeitlich erhöhte Mengen - hier RM - und unter der Annahme, dass bei der Menge RM freie Verkehrskanalelemente zur Verfügung stehen, werden nun schrittweise Verkehrskanalelemente der gemeinsamen Ressourcenmenge RM der Menge GPRSM zugeordnet, bis $N_{GPRS}$=4 und somit $N_{RM}$=15 wird.

Sollten die Verkehrskanalelemente der Ressourcenmenge RM vollständig anderen Mengen zugeordnet bzw. durch Übertragungen belegt sein, kann abhängig von der Dienstpriorität ein Handover bzw. ein Cell-Reselection-Prozess von bestehenden Übertragungen an benachbarte Funkzellen eingeleitet werden, um freie Verkehrskanalelemente für die gemeinsame Ressourcenmenge RM zu erzeugen.

FIG 13 zeigt ausgehend von FIG 7 eine Zuordnung von Verkehrskanalelementen der Mengen GPRSM, EGPRSM, RM und KDM bei einem Anstieg von paketvermittelten Übertragungen.

Es wird vorausgesetzt, dass mit $N_{KDM}$=4 insgesamt 4 kanalvermittelte Übertragungen durch die Kanaldienstmenge KDM gleichzeitig stattfinden und die Anzahl an paketvermittelten Übertragungen durch die GPRS-Menge und durch die EGPRS-Menge zunehmen soll bis auf $N_{GPRS}$=$N_{EGPRS}$=8.

Beide Mengen GPRSM und EGPRSM erhöhen ihre jeweilige zugeordnete Anzahl an Verkehrskanalelementen, wodurch die der Ressourcenmenge RM erniedrigt wird. Da in diesem Beispiel die Menge EGPRSM eine höhere Priorität als die Menge GPRSM aufweist, wird zuerst der Bedarf bei der Menge EGPRSM gestillt, nachfolgend werden Verkehrskanalelemente der Ressourcenmenge RM der Menge GPRSM zugeordnet.

**Patentansprüche**

1. Verfahren zur optimierten Nutzung der Übertragungskapazität in einem in Funkzellen unterteilten Funkkommunikationssystem, bei dem eine Basisstation mittels in Verkehrskanalelementen unterteilten Verkehrskanälen mit einem Kommunikationsendgerät zur Abwicklung von Übertragungen einzelner Dienste kommuniziert,
   **dadurch gekennzeichnet ,**
   **dass** jeder einzelne Dienst jeweils einer Menge mit einer jeweiligen Mindestanzahl an Verkehrskanalelementen zugeordnet wird, wobei diese Mindestanzahl ausschließlich für die Übertragung des jeweils zugeordneten Dienstes benutzt wird,
   **dass** die für eine Übertragung der einzelnen Dienste nicht ausschließlich benutzten Verkehrskanalelemente einer gemeinsamen Ressourcenmenge zugeordnet werden,
   **dass** jede einzelne, einem einzelnen Dienst zugeordnete Menge nach einer vorgegebenen Zugriffspriorität zeitweise auf die Verkehrskanalelemente der gemeinsamen Ressourcenmenge zugreift und diese zur jeweiligen Übertragung mitverwendet, dass eine erste, einem einzelnen Dienst zugeordnete Menge nach einer vorgegebenen Zugriffspriorität zeitweise auf die Verkehrskanalelemente einer zweiten Menge zugreift und diese für die Übertragungen des Dienstes der ersten Menge mitverwendet, und
   **dass** bei einem Mangel an Verkehrskanalelementen bei der gemeinsamen Ressourcenmenge nach einer vorgegebenen Dienstpriorität bei den einzelnen Mengen freie Verkehrskanalelemente für die gemeinsame Ressourcenmenge erzeugt werden.

2. Verfahren nach Anspruch 1,
   **dadurch gekennzeichnet ,**
   **dass** ein einzelner Dienst GSM-Sprachsignale oder AMR-Sprachsignale oder HSCSD-Daten oder ECSD-Daten oder Fax-Daten kanalvermittelt überträgt oder ein einzelner Dienst GPRS-Daten oder EGPRS-Daten paketvermittelt überträgt.

3. Verfahren nach Anspruch 1 oder 2,
   **dadurch gekennzeichnet ,**
   **dass** die einzelnen Mengen der Dienste, die ausschließlich kanalvermittelte Übertragungen abwickeln, einer Kanaldienstmenge und die Mengen der Dienste, die ausschließlich paketvermittelte Übertragungen abwickeln, einer Paketdienstmenge zugeordnet werden.

4. Verfahren nach Anspruch 2 oder 3,
   **dadurch gekennzeichnet ,**
   **dass** der EGPRS-Daten übertragende Dienst einer EGPRS-Menge und/oder der GPRS-Daten übertragende Dienst einer GPRS-Menge zugeordnet wird.

5. Verfahren nach Anspruch 2 oder 3,
   **dadurch gekennzeichnet ,**
   **dass** die GSM-Sprachsignale mittels Fullrate- und/oder Halfrate- und/oder Enhanced-Fullrate Verfahren und die AMR-Sprachsignale mittels Fullrate- und/oder Halfrate-Verfahren kanalvermittelt übertragen werden.

6. Verfahren nach den vorhergehenden Ansprüchen,
   **dadurch gekennzeichnet ,**
   **dass** die Verkehrskanalelemente durch die Trägerfrequenzen und/oder den Trägerfrequenzen zugeordneten Zeitschlitzen und/oder Codes definiert werden und die einzelnen Verkehrskanalelemente dadurch unterschieden werden.

7. Verfahren nach Anspruch 6,

**dadurch gekennzeichnet ,**

**dass** die Trägerfrequenzen zu mindestens einer Kanalgruppe zusammengefasst werden und ihr jeweils anhand einer Dienstprioritätsliste des Betreibers mit verschiedenen Prioritäten versehene abzuwickelnde Dienste derart zugeordnet werden, dass eine netzspezifische Optimierung der Übertragungskapazität des Funkkommunikationsnetzes erfolgt.

8. Verfahren nach Anspruch 7,
   **dadurch gekennzeichnet ,**
   **dass** abhängig von einem auf die Funkzellen bezogenen Trägerfrequenzwiederholungsfaktor für die Dienste, die paketvermittelte Übertragungen abwickeln, diejenigen Trägerfrequenzen verwendet werden, die innerhalb des Funkkommunikationssystems einen größeren Trägerfrequenzwiederholungsfaktor aufweisen und für die Dienste, die kanalvermittelte Übertragung von Sprachdiensten abwickeln, diejenigen Trägerfrequenzen verwendet werden, die innerhalb des Funkkommunikationssystems einen kleineren Trägerfrequenzwiederholungsfaktor aufweisen.

9. Verfahren nach Anspruch 7 oder 8,
   **dadurch gekennzeichnet ,**
   **dass** für die paketvermittelte Übertragung von EGPRS-Daten und/oder für die kanalvermittelte Übertragung von ECSD-Daten und/oder für die kanalvermittelte Übertragung von breitbandigen AMR-Sprachsignalen die Kanalgruppen verwendet werden, die über eine in der Basisstation enthaltene, für die Übertragung von EDGE-Daten geeignete EDGE-Carrier-Unit gesendet und/oder empfangen werden.

10. Verfahren nach den vorhergehenden Ansprüchen,
    **dadurch gekennzeichnet ,**
    **dass** bei einem gleichzeitig ansteigenden Bedarf an Verkehrskanalelementen sowohl für kanalvermittelte als auch für paketvermittelte Übertragungen und bei einem gleichzeitigen Mangel an Verkehrskanalelementen bei der gemeinsamen Ressourcenmenge freie Verkehrskanalelemente für die gemeinsame Ressourcenmenge durch einen Handover und/oder einen Cell-Reselection-Prozess von bestehenden Übertragungen an benachbarte Basisstationen erzeugt werden, wobei nach der Dienstprioritätsliste entweder kanalvermittelte und/oder paketvermittelte Übertragungen an benachbarte Basisstationen weitergegeben werden.

11. Verfahren nach den vorhergehenden Ansprüchen,
    **dadurch gekennzeichnet ,**
    **dass** bei einem gleichzeitig ansteigenden Bedarf an Verkehrskanalelementen sowohl für kanalvermittelte als auch für paketvermittelte Übertragungen und bei einem gleichzeitigen Mangel an Verkehrskanalelementen bei der gemeinsamen Ressourcenmenge freie Verkehrskanalelemente gemäß der Dienstprioritätsliste für die gemeinsame Ressourcenmenge erzeugt werden

    - durch einen Wechsel von bei der kanalvermittelten Übertragung von Sprachsignalen verwendeten Fullrate-Verfahren auf Halfrate-Verfahren, und/oder
    - durch eine Verringerung der einem einzelnen Teilnehmer zugeordneten Anzahl an Verkehrskanalelementen bei einer paketvermittelten Übertragung, und/oder
    - durch eine Verringerung der bei einer kanalvermittelten Übertragung von HSCSD-Daten und/oder ECSD-Daten einem einzelnen Teilnehmer zugeordneten Anzahl an Verkehrskanalelementen, und/oder
    - durch eine gemeinsame Nutzung der bei einer paketvermittelten Übertragung zugeordneten Anzahl an Verkehrskanalelementen durch mehrere Teilnehmer, wobei deren zu übertragende Daten mit Hilfe eines Multiplex-Verfahrens zusammengefasst werden.

12. Verfahren nach den vorhergehenden Ansprüchen,
    **dadurch gekennzeichnet ,**
    **dass** eine ausgelastete Basisstation neue, zusätzlich von ihr angeforderte Übertragungen abweist und dies den benachbarten Basisstationen mitgeteilt wird, indem die ausgelastete Basisstation in einer Zielzellen-Liste, auf die die benachbarten Basisstationen bei einem geplanten Handover und/oder bei einem geplanten Cell-Reselection-Prozess zur Ermittlung einer Zielzelle zugreifen, solange eine niedrigere Priorität erhält, bis ihr wieder freie Verkehrskanalelemente für die Ressourcenmenge zur Verfügung stehen.

13. Verfahren nach den vorhergehenden Ansprüchen,
    **dadurch gekennzeichnet ,**

**dass** jeder einzelnen einem Dienst zugeordneten Menge eine mittlere Anzahl an Verkehrskanalelementen zugeordnet wird.

14. Verfahren nach den vorhergehenden Ansprüchen,
    **dadurch gekennzeichnet ,**
    **dass** der gemeinsamen Ressourcenmenge eine Mindestanzahl an Verkehrskanalelementen zugeordnet wird, die nicht unterschritten werden kann.

15. Verfahren nach den vorhergehenden Ansprüchen,
    **dadurch gekennzeichnet ,**
    **dass** die einer einzelnen Menge zugeordnete Mindestanzahl an Verkehrskanalelementen nicht unterschritten werden kann.

16. Verfahren nach den vorhergehenden Ansprüchen,
    **dadurch gekennzeichnet ,**
    **dass** die mittlere Anzahl und die Mindestanzahl an Verkehrskanalelementen mit Hilfe eines Management-Systems jederzeit veränderbar sind.

17. Verfahren nach den vorhergehenden Ansprüchen,
    **dadurch gekennzeichnet ,**
    **dass** durch einen Algorithmus kontinuierlich jeweils für die einzelnen, den Diensten zugeordneten Mengen ein prozentuales Verhältnis der von der einzelnen Menge zur Übertragung gegenwärtig benutzten Verkehrskanalelemente zur Gesamtanzahl der ihr gegenwärtig zugeordneten Verkehrskanalelemente berechnet wird und dieses Verhältnis mit mehreren, für die jeweilige Menge gültigen Grenzwerten verglichen wird, wobei durch ein Unterschreiten eines ersten Grenzwerts bei einer betrachteten Menge ein Überschuss an freien Verkehrskanalelementen und dadurch eine mögliche schrittweise Verringerung der Anzahl der ihr gegenwärtig zugeordneten Verkehrskanalelemente angezeigt wird und ein Erreichen eines zweiten Grenzwerts bei einer betrachteten Menge einen Mangel an freien Verkehrskanalelementen und dadurch eine benötigte schrittweise Erhöhung der Anzahl der ihr gegenwärtig zugeordneten Verkehrskanalelemente angezeigt wird.

18. Verfahren nach Anspruch 17,
    **dadurch gekennzeichnet ,**
    **dass** unter Berücksichtigung der jeweiligen Grenzwerte und der jeweiligen Mindestanzahl an zugeordneten Verkehrskanalelementen bei einem Ansteigen des Bedarfs an Verkehrskanalelementen für kanalvermittelte Übertragungen die Mengen der Kanaldienstmenge auf die freien Verkehrskanalelemente der gemeinsamen Ressourcenmenge zugreifen oder bei einem Absinken dieses Bedarfs die Mengen der Kanaldienstmenge solange freiwerdende Verkehrskanalelemente an die Ressourcenmenge abgeben, bis die Mengen der Kanaldienstmenge ihre jeweilige mittlere Anzahl an Verkehrskanalelementen erreicht haben oder bis die jeweiligen Mengen der Kanaldienstmenge, bedingt durch einen steigenden Bedarf an Verkehrskanalelementen für paketvermittelte Übertragungen bei einem gleichzeitigen Mangel an freien Verkehrskanalelementen bei der Ressourcenmenge, ihre Mindestanzahl an Verkehrskanalelementen erreicht haben.

19. Verfahren nach Anspruch 17 oder 18,
    **dadurch gekennzeichnet ,**
    **dass** unter Berücksichtigung der jeweiligen Grenzwerte und der jeweiligen Mindestanzahl an zugeordneten Verkehrskanalelementen bei einem Ansteigen des Bedarfs an Verkehrskanalelementen für paketvermittelte Übertragungen die Mengen der Paketdienstmenge auf die freien Verkehrskanalelemente der gemeinsamen Ressourcenmenge zugreifen oder bei einem Absinken dieses Bedarfs die Mengen der Paketdienstmenge solange freiwerdende Verkehrskanalelemente an die Ressourcenmenge abgeben, bis die Mengen der Paketdienstmenge ihre jeweilige mittlere Anzahl an Verkehrskanalelementen erreicht haben oder bis die Mengen der Paketdienstmenge, bedingt durch einen steigenden Bedarf an Verkehrskanalelementen für kanalvermittelte Übertragungen bei einem gleichzeitigen Mangel an freien Verkehrskanalelementen der Ressourcenmenge, ihre Mindestanzahl an Verkehrskanalelementen erreicht haben.

20. Verfahren nach einem der Ansprüche 17 bis 19,
    **dadurch gekennzeichnet ,**
    **dass** der jeweilige Zugriff auf die Verkehrskanalelemente der Ressourcenmenge unter Berücksichtigung der vom Benutzer erstellten Zugriffspriorität erfolgt.

**21.** Verfahren nach einem der Ansprüche 17 bis 20,
**dadurch gekennzeichnet ,**
**dass** unter Berücksichtigung der Grenzwerte und der jeweiligen Mindestanzahl an zugeordneten Verkehrskanalelementen die EGPRS-Menge dann direkt auf freiwerdende Verkehrskanalelemente der GPRS-Menge zugreift, wenn bei einem Mangel an Verkehrskanalelementen bei der Ressourcenmenge und bei einem erhöhten Bedarf an Verkehrskanalelementen der Kanaldienstmenge gleichzeitig der Bedarf an Verkehrskanalelementen für die Übertragung von EGPRS-Daten ansteigt.

**22.** Verfahren nach den einem der Ansprüche 17 bis 21, **dadurch gekennzeichnet ,**
**dass** unter Berücksichtigung der Grenzwerte und der jeweiligen Mindestanzahl an zugeordneten Verkehrskanalelementen die EGPRS-Menge solange freiwerdende Verkehrskanalelemente direkt an die GPRS-Menge abgibt, solange die bei der GPRS-Menge vorhandene Anzahl an Verkehrskanalelementen unter der dortigen mittlerer Anzahl an Verkehrskanalelementen liegt und gleichzeitig ein Mangel an Verkehrskanalelementen bei der Ressourcenmenge und ein erhöhter Bedarf an Verkehrskanalelementen bei der Kanaldienstmenge besteht.

**23.** Verfahren nach einem der Ansprüche 17 bis 22,
**dadurch gekennzeichnet ,**
**dass** bei zwei Mengen nach einer erfolgten Abgabe von Verkehrskanalelementen durch die erste Menge und der Aufnahme von Verkehrskanalelementen durch die zweite Menge bei einem gleichzeitig eintretenden erhöhten Bedarf an Verkehrskanalelementen in beiden Mengen unter Beachtung der Grenzwerte und der jeweiligen Mindestanzahl an zugeordneten Verkehrskanalelementen der ersten Menge solange wieder Verkehrskanalelemente der zweiten Menge zugeführt werden, bis die erste Menge wieder ihre mittlere Anzahl an Verkehrskanalelementen erreicht hat.

**24.** Verfahren nach einem der Ansprüche 17 bis 23,
**dadurch gekennzeichnet ,**
**dass** bei einem ansteigenden Bedarf an Verkehrskanalelementen bei den den Diensten zugeordneten Mengen unter Beachtung der Zugriffspriorität diesen Mengen solange Verkehrskanalelemente der gemeinsamen Ressourcenmenge zugeordnet werden, bis bei der gemeinsamen Ressourcenmenge deren Mindestanzahl erreicht wird.

**25.** Verfahren nach einem der Ansprüche 17 bis 24,
**dadurch gekennzeichnet ,**
**dass** zusätzliche Grenzwerte zur Realisierung einer Hysterese für die Zuordnung von Verkehrskanalelementen zu den jeweiligen Mengen eingeführt werden, wobei mit Hilfe der Hysterese bei einer Menge eine Abgabe bzw. Aufnahme von Verkehrskanalelementen innerhalb eines durch die Grenzwerte gebildeten Entscheidungsbereiches stattfindet.

## FIG 1

● BTS

FZ

## FIG 2

● BTS

FZ

# FIG 3

Kanalgruppe I:

| Priorität: | Übertragung von: |
|---|---|
| 1 - hohe Priorität | AMR-Sprachsignale |
| 2 | GSM-Sprachsignalen |
| 3 | FAX-Daten |
| 4 | HSCSD-Daten |
| 5 | GPRS-Daten |
| 6 | ECSD-Daten |
| 7 - niedrige Priorität | EGPRS-Daten |

Kanalgruppe II:

| Priorität: | Übertragung von: |
|---|---|
| 1 - hohe Priorität | EGPRS-Daten |
| 2 | ECSD-Daten |
| 3 | GPRS-Daten |
| 4 | HSCSD-Daten |
| 5 | FAX-Daten |
| 6 | GSM-Sprachsignale |
| 7 - niedrige Priorität | AMR-Sprachsignalen |

FIG 4

FIG 5

FIG 6

PDM

GPRSM
EGPRSM

RM

KDM

FZ

$N_{GPRS}$
$GW1_{GPRS}$
$GW2_{GPRS}$
$Zmin_{GPRS}$
$Zavg_{GPRS}$
$V_{GPRS}$

$N_{EGPRS}$
$GW1_{EGPRS}$
$GW2_{EGPRS}$
$Zmin_{EGPRS}$
$Zavg_{EGPRS}$
$V_{EGPRS}$

$N_{COMMON}$

$N_{RM}$
$Zmin_{RM}$

$N_{KDM}$
$GW1_{KDM}$
$GW2_{KDM}$
$Zmin_{KDM}$
$Zavg_{KDM}$
$V_{KDM}$

FIG 7

KDM

RM

GPRSM

EGPRSM

$N_{KDM}$

$N_{RM}$

$N_{GPRS}$

$N_{EGPRS}$

FIG 8

FIG 9

EP 1 259 090 A1

EP 1 259 090 A1

## FIG 10

$N_{GPRS}$　　RM　　　　　　　　　　KDM

GPRSM → | 1 |

EGPRSM → | 1 |

RM: | 1 | 2 | ... | 18 |

KDM: | 1 | 2 | ... | 10 |

$N_{EGPRS}$　　　$N_{RM}$　　　　　　$N_{KDM}$

## FIG 11

$N_{GPRS}$　　RM　　　　　　　　　　KDM

GPRSM → | 1 | 2 | 3 | 4 |

EGPRSM → | 1 | 2 | 3 | 4 |

RM: | 1 | 2 | ... | 18 |

KDM: | 1 | 2 | 3 | 4 |

$N_{EGPRS}$　　　$N_{RM}$　　　　　　$N_{KDM}$

## FIG 12

$N_{GPRS}$

RM

KDM

GPRSM → | 1 | 2 | 3 | 4 |

EGPRSM → | 1 |

| 1 | 2 | 3 | 4 | 5 | ... | 15 | 1 | 2 | ... | 10 |

$N_{EGPRS}$

$N_{RM}$

$N_{KDM}$

## FIG 13

$N_{GPRS}$

RM

KDM

GPRSM → | 1 | 2 | ... | 8 |

EGPRSM → | 1 | 2 | ... | 8 |

| 1 | 2 | ... | 10 | 1 | 2 | 3 | 4 |

$N_{EGPRS}$

$N_{RM}$

$N_{KDM}$

EP 1 259 090 A1

**Europäisches Patentamt**

**EUROPÄISCHER RECHERCHENBERICHT**

Nummer der Anmeldung

EP 01 11 2136

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | WO 96 22665 A (NOKIA MOBILE PHONES LTD ;JOKINEN HARRI (FI); POSTI HARRI (FI); HAE) 25. Juli 1996 (1996-07-25) | 1-4,6,7, 9,12-25 | H04Q7/38 |
| Y | * Seite 1, Zeile 4 - Zeile 8 * | 5,8,10, 11 | |
| | * Seite 1, Zeile 27 - Zeile 34 * <br> * Seite 2, Zeile 11 - Zeile 25 * <br> * Seite 3, Zeile 25 - Zeile 36 * <br> * Seite 4, Zeile 1 - Zeile 12 * <br> * Seite 5, Zeile 1 - Seite 8, Zeile 29 * <br> --- | | |
| Y | WO 99 53700 A (ERICSSON TELEFON AB L M) 21. Oktober 1999 (1999-10-21) <br> * Seite 2, Zeile 18 - Seite 3, Zeile 20 * <br> --- | 5,11 | |
| Y | US 6 091 954 A (HAARTSEN ET AL) 18. Juli 2000 (2000-07-18) <br> * Spalte 3, Zeile 40 - Zeile 53 * <br> --- | 8 | |
| Y | WO 99 49598 A (TELIA AB) 30. September 1999 (1999-09-30) <br> * Seite 3, Zeile 14 - Seite 4, Zeile 23 * <br> --- | 10 | **RECHERCHIERTE SACHGEBIETE (Int.Cl.7)** <br><br> H04Q <br> H04L |
| A | US 5 978 368 A (HJELM ET AL) 2. November 1999 (1999-11-02) <br> * Spalte 1, Zeile 57 - Zeile 64 * <br> * Spalte 2, Zeile 35 - Zeile 57 * <br> * Spalte 5, Zeile 26 - Spalte 6, Zeile 58 * <br><br> ----- | 1 | |

Der vorliegende Recherchenbericht wurde für alle Patentansprüche erstellt

| Recherchenort | Abschlußdatum der Recherche | Prüfer |
|---|---|---|
| BERLIN | 13. September 2001 | Palencia Gutiérrez,C |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 01 11 2136

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2001

| Im Recherchenbericht angeführtes Patentdokument | Datum der Veröffentlichung | Mitglied(er) der Patentfamilie | Datum der Veröffentlichung |
|---|---|---|---|
| WO 9622665 A | 25-07-1996 | FI 950097 A | 10-07-1996 |
| | | AU 692036 B | 28-05-1998 |
| | | AU 4392796 A | 07-08-1996 |
| | | CN 1168216 A | 17-12-1997 |
| | | DE 19543845 A | 11-07-1996 |
| | | FR 2729269 A | 12-07-1996 |
| | | GB 2296844 A,B | 10-07-1996 |
| | | IT 1281596 B | 20-02-1998 |
| | | JP 3155010 B | 09-04-2001 |
| | | JP 10512724 T | 02-12-1998 |
| | | NL 1002023 C | 12-05-1999 |
| | | NL 1002023 A | 09-07-1996 |
| | | SE 9600060 A | 10-07-1996 |
| | | US 5729534 A | 17-03-1998 |
| WO 9953700 A | 21-10-1999 | AU 2966499 A | 01-11-1999 |
| | | BR 9909568 A | 19-12-2000 |
| | | CN 1305687 T | 25-07-2001 |
| | | DE 19983107 T | 10-05-2001 |
| | | GB 2353188 A | 14-02-2001 |
| US 6091954 A | 18-07-2000 | US 5666649 A | 09-09-1997 |
| | | AU 7089898 A | 30-10-1998 |
| | | BR 9807942 A | 22-02-2000 |
| | | CN 1259265 T | 05-07-2000 |
| | | DE 19882299 T | 13-04-2000 |
| | | GB 2339510 A | 26-01-2000 |
| | | WO 9846033 A | 15-10-1998 |
| | | AU 691657 B | 21-05-1998 |
| | | AU 3419295 A | 22-03-1996 |
| | | BR 9506349 A | 02-09-1997 |
| | | CA 2175459 A | 07-03-1996 |
| | | CN 1136879 A | 27-11-1996 |
| | | EP 0737409 A | 16-10-1996 |
| | | FI 961842 A | 30-04-1996 |
| | | JP 9509546 T | 22-09-1997 |
| | | RU 2139632 C | 10-10-1999 |
| | | WO 9607288 A | 07-03-1996 |
| WO 9949598 A | 30-09-1999 | EP 1070397 A | 24-01-2001 |
| | | NO 20004694 A | 26-09-2000 |
| | | SE 9801027 A | 27-09-1999 |
| US 5978368 A | 02-11-1999 | AU 4298399 A | 23-11-1999 |
| | | BR 9910067 A | 26-12-2000 |
| | | CN 1308818 T | 15-08-2001 |

Für nähere Einzelheiten zu diesem Anhang : siehe Amtsblatt des Europäischen Patentamts, Nr.12/82

EPO FORM P0461

**ANHANG ZUM EUROPÄISCHEN RECHERCHENBERICHT
ÜBER DIE EUROPÄISCHE PATENTANMELDUNG NR.**

EP 01 11 2136

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-09-2001

| Im Recherchenbericht<br>angeführtes Patentdokument | Datum der<br>Veröffentlichung | Mitglied(er) der<br>Patentfamilie | Datum der<br>Veröffentlichung |
|---|---|---|---|
| US 5978368 A | | DE 19983154 T<br>GB 2354136 A<br>WO 9957924 A | 17-05-2001<br>14-03-2001<br>11-11-1999 |

EPO FORM P0461

Für nähere Einzelheiten zu diesem Anhang : siehe Amtsblatt des Europäischen Patentamts, Nr.12/82